Europäisches Patentamt

**European Patent Office**

**Office européen des brevets**

(19)

(11) Numéro de publication: **0 068 920**
**B1**

(12) **FASCICULE DE BREVET EUROPEEN**

(45) Date de publication du fascicule du brevet:
**26.08.87**

(51) Int. Cl.⁴: **G 01 F 1/32**

(21) Numéro de dépôt: **82400956.7**

(22) Date de dépôt: **25.05.82**

(54) Débitmètre à tourbillon, notamment pour fluides à faible viscosité.

(30) Priorité: **26.05.81 FR 8110414**

(43) Date de publication de la demande:
**05.01.83 Bulletin 83/1**

(45) Mention de la délivrance du brevet:
**26.08.87 Bulletin 87/35**

(84) Etats contractants désignés:
**BE DE FR GB IT NL**

(56) Documents cités:
**FR - A - 2 150 630**
**FR - A - 2 376 400**
**FR - A - 2 417 776**
**GB - A - 1 566 790**
**US - A - 4 171 643**
**US - A - 4 248 098**

(73) Titulaire: **SEREG S.A., 12, place des Etats-Unis,**
**F-92120 Montrouge (FR)**

(72) Inventeur: **Goujon-Durand, Sophie, 146, rue Raymond**
**Losseran, F-75014 Paris (FR)**
Inventeur: **Janssen, Sylvain, 38, Rue du Bois de**
**Boulogne, F-92200 Neuilly Sur Seine (FR)**

(74) Mandataire: **Dronne, Guy, Giers Schlumberger 12 Place**
**des Etats-Unis B.P. 121, F-92124 Montrouge (FR)**

ACTORUM AG

## Description

L'invention concerne un débitmètre à tourbillon, notamment pour fluides à faible viscosité du type selon le préambule de la revendication 1 et un procédé de fabrication d'un élément détecteur d'un débitmètre à tourbillon.

On connaît un débitmètre à tourbillon constitué par un obstacle creux prismatique à section triangulaire inséré dans une tuyauterie dans laquelle circule un fluide, la face frontale de l'obstacle étant sensiblement normale à la direction d'écoulement du fluide.

L'intérieur creux de l'obstacle débouche, par un passage parallèle à la face frontale, sur les deux faces latérales et reçoit un corps amovible en forme de tige dont la tranche inférieure, localisée dans le passage, porte un élément détecteur qui est ainsi soumis aux variations de pression dues aux tourbillons apparaissant périodiquement et alternativement sur les faces latérales et qui résultent de la division du courant de fluide par l'obstacle.

Ce débitmètre connu présente un mauvais rapport signal sur bruit, dû notamment au fait que la section efficace de mesure de l'élément détecteur est limitée, et que ce dernier est relié rigidement à l'obstacle qui peut ainsi lui transmettre toutes les vibrations auxquelles il est soumis.

En outre, on connaît un débitmètre à tourbillon comportant à capteur piezoélectrique, voir le document FR-A-2 376 400.

L'objet de l'invention est d'obtenir un débitmètre qui ne présente pas l'inconvénient mentionné ci-dessus, tout en ayant une construction simple et une structure qui lui permette d'être employé avec des fluides corrosifs.

Le débitmètre du type selon le préambule de la revendication 1 est caractérisé en ce qu'il comporte un barreau piézo-électrique logé dans et solidaire d'un fourreau protecteur aplati, sensiblement parallèle à la direction d'écoulement du fluide, et soumis sur toute sa surface, supérieure à celle du barreau, aux variations de pression dues au détachement des tourbillons, le fourreau étant fixé au corps amovible.

On obtient ainsi un débitmètre de très grande sensibilité.

Selon la revendication 10, le fourreau est obtenu à partir d'un tube cylindrique fermé à une de ses extrémités, celle-ci étant aplatie autour d'une pièce de forme glissée dans le tube et ayant une section légèrement supérieure à celle du barreau piézo-électrique.

Ladite pièce de forme est ensuite remplacée par le barreau piézoélectrique, et une résine liquide est coulée puis tassée dans le fourreau de manière à ce que sa solidification rende le barreau solidaire des ailes du fourreau.

L'obtention du détecteur est ainsi particulièrement simple.

Avantageusement, le fourreau est réalisé en acier inoxydable, ce qui permet d'utiliser le débitmètre selon l'invention avec des fluides corrosifs.

De manière à éviter que le barreau piézo-électrique ne soit soumis à des vibrations parasites, le corps amovible est fixé dans l'obstacle creux avec interposition d'éléments amortisseurs.

Par exemple, lorsque le fourreau présente à son extrémité de fixation au corps amovible une section circulaire, l'invention prévoit de loger entre celle-ci et la paroi cylindrique interne de l'obstacle un anneau en élastomère qui fait également fonction de joint d'étanchéité.

De plus, l'extrémité non active du corps amovible comporte une couronne en un matériau à coefficient de transmission des vibrations relativement faible, comme par exemple de l'araldite, cette couronne étant elle-même fixée de manière amovible à la paroi interne de l'obstacle.

Dans une forme de réalisation, la couronne est appuyée sur un épaulement présenté par la paroi interne de l'obstacle par un disque à tranche filetée engagé dans un filetage correspondant de ladite paroi.

De cette façon, les vibrations auxquelles est soumis l'obstacle creux et dues soit à l'écoulement du fluide dans lequel il est plongé, soit aux vibrations de la tuyauterie dans laquelle le débitmètre est inséré, sont étouffées avant de parvenir au barreau piézo-électrique du détecteur.

Le cas échéant la couronne peut présenter des longueurs différentes de manière à positionner le barreau piézoélectrique au centre de la tuyauterie quelque soit la valeur du diamètre de celle-ci, ce qui permet de n'utiliser qu'un seul type de fourreau.

Selon un autre aspect de l'invention, l'obstacle prismatique présente une section trapézoïdale dont la base forme face frontale concave, le rapport du rayon de concavité par rapport au diamètre de la tuyauterie étant de l'ordre de 0,20, les côtés du trapèze se raccordant à la face frontale étant inclinés d'environ quatre degrés par rapport au sens d'écoulement du fluide.

L'adoption de cette forme particulière permet des mesures précises, même lorsque le fluide présente une viscosité relativement grande et s'écoule à vitesse faible.

Selon encore un autre aspect de l'invention, l'obstacle est logé dans un trou traversant diamétralement une section de tube formant le corps du débitmètre, l'extrémité creuse de l'obstacle s'appuyant par un épaulement sur la surface externe du tube, et l'autre extrémité de l'obstacle recevant à vissage un bouchon s'appuyant également par un épaulement sur le tube.

L'obstacle peut ainsi être facilement mis en place et retiré, sans avoir pour cela à extraire le corps du débitmètre de la tuyauterie dans laquelle il est installé.

L'invention sera mieux comprise à la lecture de la description faite ci-dessous à titre d'exemple seulement, en se référant aux dessins dans lesquels:

— la figure 1 est une vue en coupe axiale partielle du débitmètre suivant l'invention selon la ligne I–I de la figure 2,

– la figure 2 est une vue en coupe transversale de l'obstacle selon l'invention, le long de la ligne II–II de la figure 1,

– la figure 3 est une coupe axiale très schématique à grande échelle de l'élément détecteur selon l'invention, le long de la ligne YY' de la figure 2, et

– la figure 4 est une coupe transversale très schématique à grande échelle de l'élément détecteur selon l'invention.

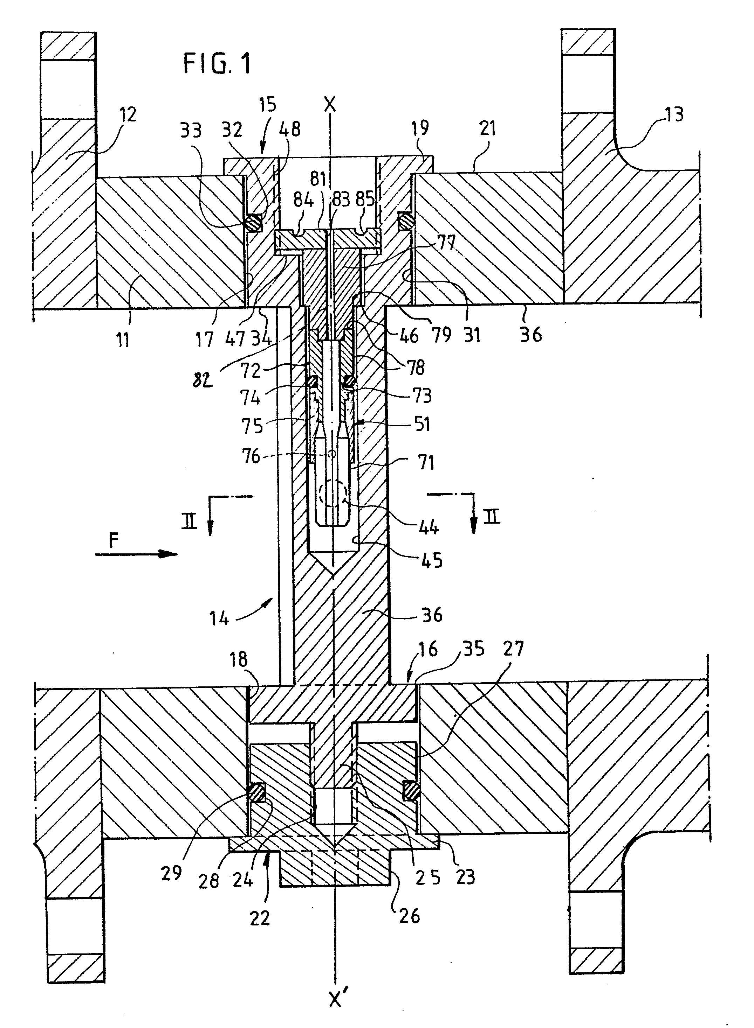

Le débitmètre à tourbillon illustré à la figure 1 comporte un corps 11 en forme de section de tuyau cylindrique, serré entre des brides 12, 13 à tirants (non représentés) d'une canalisation dans laquelle circule, dans le sens de la fèche F, parallèlement à l'axe de symétrie de la section de tuyau 11, un fluide, comme un hydrocarbure léger, dont le débit est à mesurer.

Un obstacle partiellement creux 14, par exemple en acier inoxydable, est disposé à l'intérieur du cylindre 11, selon un axe diamétral transversal XX' de ce dernier, les extrémités opposées cylindriques 15, 16 de l'obstacle étant logées dans des trous 17, 18 diamétralement opposés traversant la paroi du corps 11.

L'extrémité 15 se termine par un épaulement annulaire 19 apte à prendre appui sur la surface externe 21 du corps 11 pour immobiliser l'obstacle en direction axiale lorsqu'un bouchon 22, à épaulement annulaire 23 prenant également appui sur la surface 21, est vissé par un trou borgne fileté axial 24 qu'il présente sur un doigt fileté correspondant 25 terminant l'extrémité 16.

A cet effet, l'épaulement 23 du bouchon 22 porte une tête 26 par exemple hexagonale permettant le serrage du bouchon, et la surface cylindrique latérale 27 de ce dernier, en regard de la surface du corps 11 limitant le trou 18, comporte une rainure 28 recevant un joint d'étanchéité 29 en forme d'anneau torique, par exemple en élastomère.

De la même manière, l'extrémité 15 de l'obstacle comporte sur sa surface latérale cylindrique 31, en regard de la surface du corps 11 limitant le trou 17, une rainure 32 recevant un joint d'étanchéité 33.

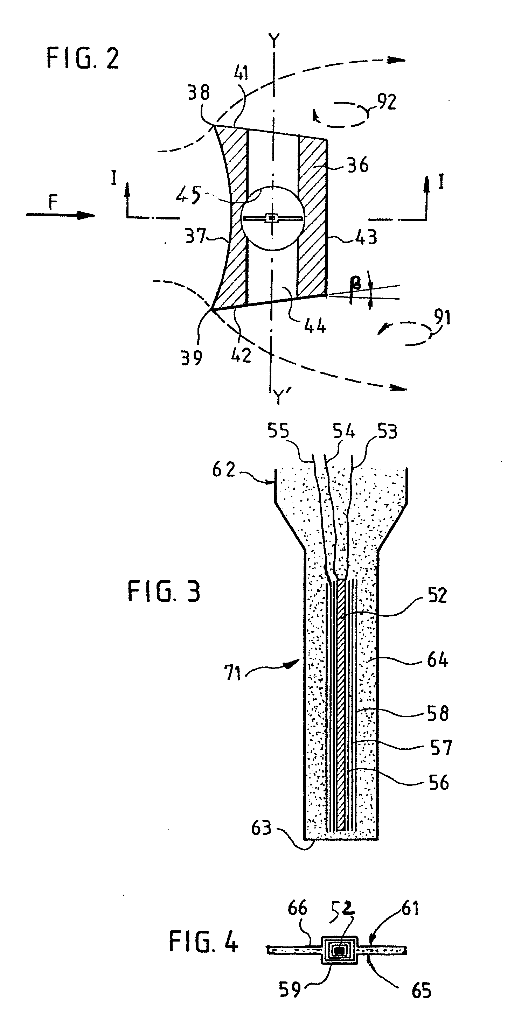

Les deux extrémités 15, 16, dont les faces internes 34, 35 affleurent la surface interne 36 du corps 11, sont reliées par un barreau prismatique droit 36 symétrique par rapport à un plan axial parallèle à la direction F, à section réduite par rapport à celle des extrémités 15, 16 et en forme générale de trapèze (fig. 2) dont la face frontale 37 concave est reliée, par des arêtes 38, 39 parallèles à l'axe XX' de détachement des tourbillons, à deux faces latérales 41, 42 inclinées d'un angle β par rapport à la direction F, et jointes par la face plane arrière plus petite 43 du trapèze.

Sur les faces 41 et 42 débouche un passage cylindrique traversant 44 d'axe YY', normal à la direction F ainsi que normal à et interceptant l'axe XX', et qui s'ouvre dans sa partie médiane dans un trou borgne cylindrique 45 du barreau 36, d'axe XX', débouchant à la surface extérieure de l'extrémité 15, et de diamètre supérieur à celui du trou 44.

A titre d'exemple, pour un corps 11 de diamètre égal à 80 mm, le rayon de la face concave peut être de l'ordre de 19 mm, l'épaisseur transversale hors tout du barreau prismatique, perpendiculairement à la direction F peut être de l'ordre de 18 mm, la largeur hors tout parallèlement à la direction F, peut être de l'ordre de 10 mm, et β peut avoir pour valeur β = 4° (ces proportions n'étant pas respectées sur les figures pour permettre une meilleure représentation de l'élément détecteur).

Le trou 45 qui s'étend de part et d'autre du passage traversant 44 situé sensiblement à mi-hauteur du barreau 36 s'élargit à sa partie proche de l'extrémité 15 en deux gradins formant épaulements successifs 46, 47, l'extrémité du trou 45 situé au-dessus du gradin 47 étant filetée intérieurement en 48.

Le trou borgne 45 reçoit un détecteur amovible 51 comportant (fig. 3) un barreau piézo-électrique 52 relié par des liaisons électriques 53, 54 à un dispositif amplificateur de type classique non représenté, localisé à l'extérieur de l'obstacle, le barreau étant entouré successivement par un fourreau isolant en téflon 56, un fourreau de blindage en cuivre 57 relié à l'amplificateur par une liaison électrique 55, et un second fourreau isolant en téflon 58.

Cet ensemble est fixé à l'intérieur d'une cavité de réception 59 centrale présentée par un fourreau métallique 61, par exemple en acier inoxydable, de forme générale plate placé dans le plan de symétrie de l'obstacle, la cavité 59 d'axe XX' s'étendant entre deux ailes 65, 66, la largeur de chaque aile selon la direction F étant sensiblement égale ou légèrement supérieure à celle de la cavité.

Ce fourreau 61 est obtenu à partir de l'extrémité basse 71 (sur la figure) d'un tube cylindrique 62 à paroi mince fermé à son extrémité inférieure 63, qui est aplatie autour d'une barre utilisée comme forme, la barre ayant une section rectangulaire légèrement plus grande que celle du barreau piézoélectrique et étant préalablement glissé dans le tube 62, puis remplacée par l'ensemble du barreau piézo-électrique 52 et des gaines qui l'entourent. Le volume laissé libre par le barreau 52 dans le fourreau 61 et le tube 62 est ensuite remplis par une résine liquide 64, comme de l'araldite qui en se solidifiant rend le barreau 52 solidaire du fourreau, et en particulier des ailes 65, 66 latérales présentées par ce dernier.

L'extrémité aplatie 71 du tube 62, placée en regard du passage 44 et dont la paroi n'est représentée en section à la figure 1, pour plus de clarté, que par un trait, est surmontée par une section cylindrique 72 non aplatie à paroi plus épaisse mais de même diamètre interne, présentant une rainure latérale 73 logeant un joint d'étanchéité 74 prenant appui sur la face interne du trou 45, et formant point d'appui pour l'élément détecteur, la section cylindrique 72 se raccordant à l'extrémité 71 par deux décrochements successifs.

La paroi amincie en 71 du tube 62 peut être obtenue par usinage de ce dernier, ou en fixant l'un à l'autre des tubes à épaisseur de paroi différentes.

Entre la rainure 73 et l'extrémité aplatie 71, le fourreau reçoit une pièce de rigidification 75 formée de deux demi-coquilles cylindriques placées autour du fourreau et soudées par leurs extrémités proches de la rainure 73 à la section 72 du fourreau par les surfaces de décrochements qui y sont ménagées.

Cette pièce qui entoure à espacement la partie supérieure de l'extrémité 71 du fourreau et qui a un même diamètre externe que la section 72, sert de point d'ancrage au barreau piézo-électrique par l'intermédiaire de deux entretoises 76 ou vis fixées chacune à une demi-coquille et s'étendant à l'intérieur de ces dernières jusqu'au logement 59 du fourreau parallèlement à la direction YY', les points de contact des entretoises 76 et du logement 59 étant proches de l'extrémité supérieure du barreau 52.

A son extrémité supérieure, la section 72 cylindrique se raccorde à un premier épaulement d'une couronne 77 à laquelle elle est fixée par exemple par collage, et qui présente un second épaulement 79 prenant appui sur la butée annulaire 46 présentée par l'obstacle 36.

La couronne 77 s'étend vers le haut à partir de l'épaulement 79 sur une longueur légèrement supérieure à celle qui sépare la butée 46 de la butée 47, de manière à déboucher dans la partie élargie supérieure du trou 45, et à être pressée sur la butée 46 par serrage d'une rondelle 81 à tranche filetée vissée dans le filetage 48.

La couronne 77 et la rondelle 81 présentent des trous traversant 82, 83 en regard, d'axe XX', destinés à permettre le passage des liaisons 53 à 55 qui s'étendent à partir du barreau piézoélectrique 52 vers le haut à l'intérieur du tube 62, et la rondelle 81 présente deux creusures 84, 85, facilitant son vissage.

La distance séparant l'épaulement 78 de l'épaulement 79 peut être modifiée de manière à positionner le barreau piézoélectrique au centre du corps 11 quelque soit la valeur du diamètre de celui-ci, ce qui permet de n'utiliser qu'un seul type de tube 62 et de fourreau 61.

Le fonctionnement du débitmètre qui vient d'être décrit est le suivant:

Pour monter le débitmètre, il suffit de placer la section de corps 11 entre les brides 12, 13, de rapprocher ces dernières par des tirants non figurés, puis de glisser le barreau 36 dans l'ouverture 17 et de le fixer par vissage du bouchon 22 dans le trou 18 sur le doigt 25.

Le détecteur amovible 51 est alors introduit dans le trou borgne 45 et fixé dans ce dernier par vissage de la rondelle 81.

Du fluide peut alors être admis dans la tuyauterie, et son courant arrivant selon la direction F sur la face concave 37 se divise en deux filets passant de part et d'autre de l'obstacle en se détachant de ce dernier le long de ses arêtes 38, 39, et en formant des tourbillons 91, 92, périodiques successivement et alternativement sur les faces latérales 41, 42 de l'obstacle.

Le fluide emplissant le passage 44 et le trou 45 jusqu'au joint 74 soumet l'extrémité aplatie 71 du détecteur, qui se présente sensiblement perpendiculairement à l'axe YY' du passage 44, à des flexions alternatives, les entretoises 76 formant point d'ancrage haut du barreau piézo-électrique.

La surface des ailes 65, 66 du fourreau métallique 62 est suffisamment importante pour que le signal généré par le barreau piézo-électrique 52 soit fort même lorsque la vitesse du fluide est faible et sa viscosité forte si bien que les tourbillons 91, 92 sont peu accentués; au contraire les vibrations auxquelles peut être soumis le corps 11 et le barreau 36, dues à l'écoulement du fluide ou à des causes extérieures, ne sont pas transmises au barreau piézo-électrique 52 grâce à l'interposition de la couronne 77 en araldite et de l'anneau d'étanchéité élastique 74.

Les signaux issus du barreau piézo-électrique 52 et transmis par les liaisons électriques 53, 54 sont alors traités dans l'amplificateur électronique de manière classique, et l'on peut déduire de la fréquence des signaux obtenus celle de la formation des tourbillons 91, 92, elle-même reliée au débit de fluide à mesurer par des relations connues.

## Revendications

1. Débitmètre à tourbillon comportant un obstacle (14) dont l'intérieur creux (45) débouche par un passage transversal (44) sur deux faces latérales (41, 42) de l'obstacle, et reçoit un corps amovible (51) en forme de tige portant un détecteur, caractérisé en ce que le détecteur est un barreau piézo-électrique (52) logé dans et solidaire d'un fourreau (61) protecteur aplati, sensiblement parallèle à la direction d'écoulement du fluide et soumis sur toute sa surface, supérieure à celle du barreau, aux variations de pression dues au détachement des tourbillons, le fourreau étant fixé au corps amovible (51).

2. Débitmètre à tourbillon selon la revendication 1, caractérisé en ce que le fourreau est constitué d'un tube cylindrique (62) fermé à une de ses extrémités (63), celle-ci étant aplatie autour du barreau piézo-électrique pour former de part et d'autre de celui-ci des ailes (65, 66) une résine solidifiée (64) rendant le barreau solidaire du fourreau.

3. Débitmètre à tourbillon selon la revendication 1 ou la revendication 2, caractérisé en ce que le fourreau est réalisé en acier inoxydable, ce qui permet d'utiliser le débitmètre avec des fluides corrosifs.

4. Débitmètre à tourbillon selon la revendication 1, caractérisé en ce que, de manière à éviter que le barreau piézo-électrique ne soit soumis à des vibrations parasites, le corps amovible est fixé dans l'obstacle creux avec interposition d'éléments amortisseurs (74, 77).

5. Débitmètre à tourbillon selon la revendication 4, caractérisé en ce que le fourreau présente à son extrémité de fixation au corps amovible une section circulaire, un anneau en élastomère (74) qui fait également fonction de joint d'étanchéité étant logé entre ladite extrémité et la paroi cylindrique interne de l'obstacle.

6. Débitmètre à tourbillon selon la revendication 4, caractérisé en ce que l'extrémité non détectrice du corps amovible comporte une couronne (77) en un matériau à coefficient de transmission des vibrations relativement faible, comme de l'araldite.

7. Débitmètre à tourbillon selon la revendication 6, caractérisé en ce que la couronne est appuyée sur un éapaulement (47) présenté par la paroi interne de l'obstacle par un disque (81) à tranche filetée vissé dans un filetage correspondant de ladite paroi.

8. Débitmètre à tourbillon selon la revendication 6, caractérisé en ce que la couronne présente une longueur adaptée au diamètre du corps (11).

9. Débitmètre à tourbillon selon la revendication 1, caractérisé en ce que l'obstacle est logé dans un trou (31, 18) traversant diamétralement une section de tube (11) formant le corps du débitmètre, l'extrémité creuse de l'obstacle s'appuyant par un épaulement (19) sur le tube, et l'autre extrémité de l'obstacle recevant à vissage un bouchon (22) s'appuyant également par un épaulement (23) sur le tube.

10. Procédé de fabrication de l'élément détecteur d'un débitmètre à tourbillon, caractérisé en ce qu'un tube cylindrique fermé à une de ses extrémités est aplati autour d'une pièce de forme glissée dans le tube et ayant une section légèrement supérieure à celle d'un barreau piézo-électrique, ladite pièce de forme étant ensuite remplacée par le barreau piézoélectrique, puis une résine liquide étant coulée dans le tube de manière que sa solidification rende le barreau solidaire du tube.

**Claims**

1. A vortex flow meter including an obstacle (14) having a hollow interior (45) which opens out into two side faces (41, 42) of the obstacle via a transverse passage (44) and which receives a removable body (51) in the form of a rod carrying a detector, the meter being characterized in that the detector is a piezoelectric bar (52) received inside and fixed to a protective sheath (61) which is flattened substantially parallel to the flow direction of the fluid and which is subjected over its entire area above the bar to variations in pressure due to vortex shedding, the sheath being fixed to the removable body (51).

2. A vortex flow meter according to claim 1, characterized in that the sheath is constituted by a cylindrical tube (62) which is closed at one of its ends (63) and which is flattened about the piezoelectric bar in order to form fins (65, 66) on either side thereof, with a solidified resin (64) fixing the bar to the sheath.

3. A vortex flow meter according to claim 1 or claim 2, characterized in that the sheath is made of stainless steel, thereby enabling the flow meter to be used with corrosive fluids.

4. A vortex flow meter according to claim 1, characterized in that in order to prevent the piezoelectric bar being subjected to interfering vibrations, the removable body is fixed inside the hollow obstacle via interposed damping elements (74, 77).

5. A vortex flow meter according to claim 4, characterized in that the sheath is of circular section at its end for fixing to the removable body, with an elastomer ring (74), which also serves as a sealing ring, being received between said end and the inside cylindrical wall of the obstacle.

6. A vortex flow meter according to claim 4, characterized in that the non-detector end of the removable body includes a plug (77) made of a material having a relatively low vibration transmission coefficient, such as araldite.

7. A vortex flow meter according to claim 6, characterized in that the plug is pressed against a shoulder (47) provided on the inside wall of the obstacle by a disk (81) having a threaded outside edge screwed into a corresponding thread on said wall.

8. A vortex flow meter according to claim 6, characterized in that the plug has a length which fits the diameter of the body (11).

9. A vortex flow meter according to claim 1, characterized in that the obstacle is received in a hole (31, 18) passing diametrically through a section of tube (11) forming the body of the flow meter, the hollow end of the obstacle pressing against a shoulder (19) on the tube, and the other end of the obstacle having a stopper (22) screwed therein and likewise pressing against the tube via a shoulder (23).

10. A method of manufacturing a detector element for a vortex flow meter, the method being characterized in that a cylindrical tube which is closed at one of its ends is flattened around a shaper part slid into the tube and having a section which is slightly greater than that of a piezoelectric bar, said shaper part subsequently being replaced by the piezoelectric bar, and a liquid resin then being cast into the tube so as to fix the bar to the tube by solidifying.

**Patentansprüche**

1. Wirbeldurchflussmesser mit einem Hindernis (14), dessen hohles Inneres (45) sich über einen Querdurchlass (44) auf beide Seitenflächen (41, 42) des Hindernisses hin öffnet und einen entfernbaren, stielförmigen Körper (51), der eine Messvorrichtung trägt, aufnimmt, dadurch gekennzeichnet, dass die Messvorrichtung ein piezoelektrischer Stab (52) ist, der fest in einer abgeflachten Schutzhülse (61) sitzt, die in etwa zur Flussrichtung der Flüssigkeit parallel und auf ihrer ganzen Oberfläche, die oberhalb derjenigen des Stabes ist, Druckschwankungen aufgrund von Wirbelablösung unterworfen ist, wobei die Hülse am abnehmbaren Körper (51) befestigt ist.

2. Wirbeldurchflussmesser nach Anspruch 1, dadurch gekennzeichnet, dass die Hülse aus einem zylindrischen Rohr (62) besteht, das an einem seiner Enden (63) geschlossen ist, wobei dieses um den piezoelektrischen Stab herum abgeflacht ist, um beiderseits des Stabes Flügel (65, 66) zu bilden, und ein verfestigtes Harz (64) den Stab fest mit der Hülse verbindet.

3. Wirbeldurchflussmesser nach Anspruch 1 oder 2, dadurch gekennzeichnet, dass die Hülse aus nichtrostendem Stahl besteht, was die Benutzung des Durchflussmessers mit korrosiven Flüssigkeiten ermöglicht.

4. Wirbeldurchflussmesser nach Anspruch 1, dadurch gekennzeichnet, dass der entfernbare Körper im hohlen Hindernis über Dämpfungselemente (74, 77) befestigt ist, um zu verhindern, dass der piezoelektrische Stab Störschwingungen unterworfen wird.

5. Wirbeldurchflussmesser nach Anspruch 4, dadurch gekennzeichnet, dass die Hülse an dem Ende, an dem sie am entfernbaren Körper befestigt ist, einen kreisförmigen Querschnitt aufweist, wobei zwischen diesem Ende und der zylinderförmigen Innenwand des Hindernisses ein Ring (74) aus einem Elastomer sitzt, der auch als Abdichtung dient.

6. Wirbeldurchflussmesser nach Anspruch 4, dadurch gekennzeichnet, dass das nicht mit der Messvorrichtung ausgestattete Ende des entfernbaren Körpers eine Krone (77) aus einem Material mit einem relativ niedrigen Schwingungstransmissionskoeffizienten, wie z.B. Araldit, enthält.

7. Wirbeldurchflussmesser nach Anspruch 6, dadurch gekennzeichnet, dass die Krone auf eine Anschlagschulter (47) der Innenwand des Hindernisses durch eine mit einem Gewinde versehene, scheibenförmige Platte (81), die in ein entsprechendes Gewinde der besagten Wand geschraubt wird, gedrückt wird.

8. Wirbeldurchflussmesser nach Anspruch 6, dadurch gekennzeichnet, dass die Krone eine zum Durchmesser des Körpers (11) passende Länge aufweist.

9. Wirbeldurchflussmesser nach Anspruch 1, dadurch gekennzeichnet, dass das Hindernis in einem Loch (31, 18) sitzt, das einen Abschnitt des Rohrs (11), das den Körper des Durchflussmessers bildet, diametral durchläuft, wobei das hohle Ende des Hindernisses über eine Schulter (19) auf dem Rohr aufliegt, und das andere Ende des Hindernisses mit einem aufschraubbaren Verschluss (22) versehen ist, der gleichermassen über eine Schulter (23) auf dem Rohr aufliegt.

10. Verfahren zur Herstellung des Messelements eines Wirbeldurchflussmessers, dadurch gekennzeichnet, dass ein an einem seiner Enden geschlossenes, zylindrisches Rohr um ein Formstück, das in das Rohr eingeschoben wurde und einen etwas grösseren Querschnitt als ein piezoelektrischer Stab hat, abgeflacht wird; besagtes Formstück wird daraufhin durch den piezoelektrischen Stab ersetzt; anschliessend wird ein Flüssigharz so in das Rohr eingegossen, dass sein Aushärten den Stab fest mit dem Rohr verbindet.

FIG. 1

FIG. 2

FIG. 3

FIG. 4